# EUROPÄISCHE PATENTANMELDUNG

(11) **EP 3 730 272 A1**
(43) Veröffentlichungstag der Anmeldung: **28.10.2020**
(21) Anmeldenummer: 20157172.6
(22) Anmeldetag: 13.02.2020
(51) Int. Cl.: B29C 44/14, B29C 44/44, B29C 67/20

(54) **VERFAHREN ZUR HERSTELLUNG EINES FLÄCHENHAFT AUSGEBILDETEN BAUELEMENTES**

(30) Priorität: 12.04.2019 DE 102019109823
(71) Anmelder: PARAT Beteiligungs GmbH, 94089 Neureichenau (DE)
(72) Erfinder: Prinz, Maximilian, 94036 Passau (DE)
(74) Vertreter: Roche, von Westernhagen & Ehresmann

(57) **Zusammenfassung**

Die Erfindung betrifft unter anderem ein Verfahren zur Herstellung eines flächenhaft ausgebildeten Bauelementes (10) in Sandwich-Leichtbauweise mit einer hochwertigen Oberfläche (26).

## Beschreibung

Die Erfindung betrifft ein Verfahren zur Herstellung eines flächenhaft ausgebildeten Bauelementes in Sandwich-Leichtbauweise mit einer hochwertigen Oberfläche.

Derartige Verfahren werden von der Anmelderin seit Jahrzehnten entwickelt und in großem Umfange durchgeführt.

Lediglich beispielhaft wird verwiesen auf die folgenden deutschen Patentanmeldungen der Anmelderin:
DE 10 2018 117 337, DE 10 2017 109 953, DE 10 2016 112 290 A1, DE 10 2013 018 694 A1, DE 10 2013 008 592 A1, DE 10 2013 005 523 A1, DE 10 2013 008 364 A1, DE 10 2015 111 052 A1 sowie DE 10 2012 017 698 A1,
deren Inhalt hiermit in den Inhalt der vorliegenden Patentanmeldung zur Vermeidung von Wiederholungen miteingeschlossen wird.

Die Anmelderin ist darüber hinaus Inhaberin der deutschen nachveröffentlichten Patentanmeldung DE 10 2018 123 703 A1, die ein Verfahren zur Herstellung eines Bauelementes beschreibt, bei dem granulare lose Partikel eines aufschäumbaren Partikelschaums zunächst teilweise aufgeschäumt, sodann insbesondere in ein Unterwerkzeug verbracht werden, und in dem Werkzeug endaufgeschäumt werden.

Die von der Anmelderin bislang überwiegend angewandten Verfahren zur Herstellung eines solchen flächenhaft ausgebildeten Bauelementes umfassen insbesondere Verbindungen von thermoplastischen tiefgezogenen Folien mit Polyurethan-Schaummassen.

Hiervon ausgehend liegt der Erfindung die Aufgabe zugrunde, ein Verfahren anzugeben, mit dem ein flächenhaftes Bauelement gefertigt werden kann, welches den Anforderungen an ein geringes Gewicht und eine hohe Steifigkeit gerecht wird, und preisgünstig gefertigt werden kann.

Die Erfindung löst diese Aufgabe mit den Merkmalen des Anspruches 1.

Das Prinzip der Erfindung besteht zunächst darin, anstelle der bislang verwendeten Polyurethan-Zweikomponentenschäume einen expandierbaren Partikelschaum einzusetzen.

Als geeignete expandierbare Partikelschäume kommen beispielsweise Partikelschäume aus EPS, EPE und EPP infrage. Es handelt sich hier um Partikelschäume, die im voll oder endfertig ausgeschäumten und ausgehärteten Zustand Dichten im Bereich von typischerweise 15 kg/m³ bis 80 kg/m³ aufweisen können.

Gemäß der Erfindung wird zunächst ein folienartiges Substrat bereitgestellt. Es kann sich dabei beispielweise um eine tiefziehbare Folie, z. B. aus ABS oder PMMA handeln. Diese kann beispielsweise eine Wandstärke zwischen 0,2 mm und 13 mm aufweisen. Die Folie kann beispielsweise in einem ersten Werkzeug tiefgezogen werden. Das verwendete Substrat kann aber auch von einer dünnen Haut, einer dünnen Folie, z. B. aus Metall, oder einem anderen flächenhaften Material bereitgestellt sein. Das Substrat muss nicht tiefgezogen sein.

Gemäß der Erfindung wird das Substrat in einem Unterwerkzeug angeordnet. Das Unterwerkzeug weist dabei insbesondere einen Aufnahmeraum für Partikel auf, was später noch detaillierter erläutert wird.

Das erfindungsgemäße Verfahren sieht nun vor, dass granulares Ausgangsmaterial in Form von losen Partikeln eines aufschäumbaren Partikelschaums bereitgestellt wird. Infrage kommen also solche Materialien, die als expandierbare Partikelschäume bekannt sind. Insbesondere versteht man hierunter expandierbare Partikelschäume aus EPS, EPE, oder EPP, oder auch expandierbares PEEK. Eine weitere Definition erfolgt weiter unten.

Das granulare Ausgangsmaterial kann in der verwendeten Form von kleinen Kügelchen oder Perlen, oder in Form von granularen Partikeln anderer regelmäßiger oder auch unregelmäßiger Form und Geometrie bereitgestellt werden. Das Ausgangsmaterial ist insbesondere schüttbar.

Die Partikel sind in dem granularen Ausgangsmaterial lose vorhanden, d. h. insbesondere nicht fest miteinander verbunden.

Gemäß der Erfindung erfolgt nun der Schritt eines vollständigen Aufschäumens der Partikel. Das vollständige Aufschäumen bedeutet, dass die Partikel nach Erreichen ihres vollständig aufgeschäumten Zustandes nicht weiter aufgeschäumt werden können. Beispielsweise können die expandierbaren oder aufschäumbaren granularen Partikel des Partikelschaumes Treibmittel aufweisen, die für den Aufschäumprozess sorgen. Ein vollständig aufgeschäumter Partikel weist kein Treibmittel mehr auf. Dieses ist, wenn der Partikel vollständig aufgeschäumt ist, aus dem Partikel vollständig entwichen.

Gemäß der Erfindung sind die vollständig aufgeschäumten Partikel aber immer noch lose, das heißt nicht fest miteinander verbunden, und insbesondere schüttbar. Es kann sich beispielsweise um Kügelchen oder Körper anderer beliebiger Raumform handeln.

Die aufgeschäumten, als Granulat vorliegenden Partikel können in einem nachfolgend beschriebenen Schritt in dem Werkzeug miteinander verbacken werden, und dabei zugleich mit dem Substrat verbacken werden. Ein solcher Prozess kann auch als Sintern bezeichnet werden.

Während des Schrittes des Verbackens findet - anders, als in der oben in Bezug genommenen nachveröffentlichten deutschen Patentanmeldung DE 10 2018 123 703.0 - keine Volumenvergrößerung statt, oder allenfalls nur eine geringe Volumenvergrößerung statt.

Von der Erfindung ist auch umfasst, wenn das Volumen der Partikelschaummasse während des Schrittes des Verbackens reduziert wird. Dies kann beispielsweise erreicht werden durch eine Überladung des Werkzeugs mit vollständig aufgeschäumten Partikeln.

Bei dieser Variante ist also das Volumen der bereitgestellten, vollständig aufgeschäumten Partikel größer, als der Unterbringungsraum im Werkzeug. Beim Schließen des Werkzeuges wird das Volumen der aufgeschäumten Partikel zum Zwecke des Verbackens und zur Erzielung einer homogenen Partikelschaummasse reduziert.

Bei einer Variante der Erfindung wird im Zuge der Werkzeugschließung zusätzlich Druck auf die Partikelschaummasse ausgeübt, um eine homogene Partikelschaummasse zu erzielen.

Beispielsweise kann gemäß der Erfindung vorgesehen sein, dass bezogen auf einen Aufschäum- oder Expansionsvorgang von 0 bis 100% ausgehend vom Volumen der Partikel des Ausgangsmaterials bis zu dem Volumen der Partikel im endfertig geschäumten Zustand, ein vollständiges Aufschäumen zwischen 95% und 100% stattfindet.

Der Schritt des vollständigen Aufschäumens der Partikel erfolgt insbesondere - aber nicht zwingend - an einem Ort, der sich entfernt von dem Unterwerkzeug befindet, in dem das Substrat angeordnet ist. Weiter vorteilhafterweise kann das vollständige Aufschäumen der Partikel in einem Ofen, insbesondere in einem Infrarot-Backofen, durchgeführt werden.

Gemäß einem weiteren Schritt des erfindungsgemäßen Verfahrens kann vorgesehen werden, dass die vollständig aufgeschäumten Partikel in das Unterwerkzeug verbracht werden. Der Transport der vollständig aufgeschäumten Partikel kann beispielsweise zeitlich unmittelbar nach der Durchführung des Schrittes des vollständigen Aufschäumens der Partikel durchgeführt werden. Er kann aber auch zeitlich deutlich später nach Durchführung des Schrittes des vollständigen Aufschäumens der Partikel durchgeführt werden.

Ein Verbringen und/oder ein Anordnen oder Positionieren der vollständig aufgeschäumten Partikel in dem Unterwerkzeug kann maschinell, automatisiert, oder händisch erfolgen.

Gemäß der Erfindung wird anschließend das mehrteilige, insbesondere wenigstens zweiteilige, und ein Ober- und ein Unterwerkzeug umfassende Werkzeug insbesondere geschlossen. Hierzu kann beispielsweise ein Oberwerkzeug gegen das Unterwerkzeug fahren und einen Aufnahmeraum oder Unterbringungsraum für die vollständig aufgeschäumten Partikel - sowie für das in dem Unterwerkzeug befindliche Substrat - verschließen.

Gemäß der Erfindung wird des weiteren das Werkzeug geheizt. Von der Erfindung ist auch umfasst, wenn das Werkzeug ständig bei einer konstanten Temperatur oder bei einer Temperatur innerhalb eines vorgegebenen Temperaturbereichs gehalten wird. Von der Erfindung ist weiter auch umfasst, wenn das Werkzeug einer Temperaturwechselbeanspruchung unterliegt, um im Rahmen eines Zyklus hohe Temperaturen oberhalb der Schmelztemperatur des Partikelschaumes als auch Temperaturen unterhalb der Schmelztemperatur des Partikelschaumes bereitstellen zu können.

Gemäß der Erfindung erfolgt sodann ein Schritt des Verbackens der vollständig aufgeschäumten Partikel zu einer homogenen oder im wesentlichen homogenen aushärtbaren Partikelschaummasse. Die Partikel verbacken oder versintern sozusagen miteinander. Dabei verbindet sich die Partikelschaummasse zugleich mit dem Substrat. Die Aktivierung des Schrittes des Verbackens erfolgt über die Werkzeugtemperatur.

Gemäß der Erfindung erfolgt sodann ein Aushärtenlassen der Partikelschaummasse. Infolge dieses Aushärtevorgangs geht die Partikelschaummasse mit dem Substrat eine dauerhafte feste Verbindung ein.

Von der Erfindung ist auch umfasst, wenn das Substrat auf seiner der Partikelschaummasse zugewandten Innenseite vor dem Verbringen der aufgeschäumten Partikel in das Unterwerkzeug mit einer entsprechenden Chemikalie, z. B. nach Art eines Haftgrundes, versehen wird, um die Verbindung zwischen dem Substrat und der Partikelschaummasse bzw. das Eingehen der Verbindung zwischen dem Substrat und der Partikelschaummasse zu optimieren.

Nach dem Aushärtenlassen der Partikelschaummasse kann das Werkzeug geöffnet und der so gebildete Formling entnommen werden. Der so gebildete Formling stellt das erfindungsgemäß zu fertigende Bauelement dar, oder kann durch nachfolgende Bearbeitungsschritte zu einem solchen Bauelement heranreifen.

### Definition expandierbarer Partikelschaum:

Als expandierbare Partikelschäume im Sinne der vorliegenden Patentanmeldung werden beispielsweise folgende Materialien angesehen:
Unter der Abkürzung EPS wird expandierbares Polystyrol bezeichnet. Dieses ist beispielsweise unter der Markenbezeichnung Styropor bekannt, und kann z. B. von der Firma Metz EPS-Hartschaumzuschnitte in 74376 Gemmrigheim bezogen werden.

Als Partikelschaum im Sinne der vorliegenden Patentanmeldung werden auch expandierbare Polyethylene (EPE) angesehen. Schließlich werden auch expandierbare Polypropylene (EPP) für die erfindungsgemäßen Zwecke als gut geeignet angesehen.

Insbesondere sind von dem Begriff Partikelschaum im Sinne der vorliegenden Patentanmeldung thermoplastische Partikelschäume umfasst. Diese können als Ausgangsmaterial Granulat, insbesondere auch Microgranulat, beispielsweise mit Durchmessern der Partikel in der Größenordnung von zwischen 0,1 mm und 5 mm aufweisen, weiter vorzugsweise Partikel mit einem Durchmesser von ca. 1mm.

In den granularen Ausgangsmaterial-Partikeln des Partikelschaums sind vorzugsweise Treibmittel angeordnet. Diese können thermisch und/oder durch Chemikalien, beispielsweise auch durch Einwirkung von Wasserdampf, aktiviert werden, um den Schäumprozess auszulösen.

Als Treibmittel kommt für Polystyrol-Partikelschaum-Partikel beispielsweise Pentan in Betracht, das in die granularen Partikel einpolymerisiert ist. Sobald die Partikel Temperaturen von über 100°C ausgesetzt werden, kann das Treibmittel verdampfen und bläht dabei das thermoplastische Grundmaterial zu Polystyrol-Schaumpartikeln auf.

Das Verbacken oder Versintern kann erfindungsgemäß erst im Unterwerkzeug erfolgen, wobei die Werkzeugtemperatur so gewählt wird, dass die Partikel miteinander und mit dem Substrat eine aushärtbare Verbindung eingehen können.

Neben EPS (extrudierbares Polystyrol) kommt für die Erfindung auch XPS in Betracht.

Als Bezugsquelle für expandierbares Polypropylen EPP bzw. XPS kommt beispielsweise die Firma Schaumaplast GmbH & Co. KG in 68799 Reilingen in Betracht.

Partikelschäume zum Einsatz mit der Erfindung können auch von expandierbaren Co-Polymeren bereitgestellt werden. Derartige Materialien sind beispielsweise unter dem Handelsnamen Grupor von dem Kunststoffwerk Katzbach GmbH & Co. KG in 93413 Cham beziehbar.

Als Ausgangsmaterial des im Rahmen der Erfindung einsetzbaren Partikelschaums kommt auch expandierbares PEEK (Polyetheretherketon) in Betracht. Dieses ist beispielsweise unter den Handelsnamen Gatone oder Victrex beziehbar.

Das erfindungsgemäße Verfahren dient zur Herstellung eines Bauelementes mit einer hochwertigen Oberfläche. Eine hochwertige Oberfläche kann beispielsweise besonders belastbar, z. B. in besonderem Maße schlagzäh ausgebildet sein, und weiter insbesondere für Außenanwendungen geeignet sein. Insbesondere kann eine hochwertige Oberfläche Eigenschaften aufweisen, wie sich bei sogenannten Class-A-Oberflächen gefordert sind.

Die Erfindung bezieht sich auf ein Verfahren zur Herstellung eines flächenhaft ausgebildeten Bauelementes. Der Begriff flächenhaft bedeutet, dass sich das Bauelement entlang einer Fläche in x- und y-Richtung erheblich länger erstreckt, als in einer senkrecht dazu stehenden z-Richtung. Die Fläche kann eben oder im Raum gekrümmt, auch mehrfach gekrümmt, ausgebildet sein, und jegliche beliebige Raumform einnehmen.

Gemäß einer vorteilhaften Ausgestaltung der Erfindung ist das Substrat von einer tiefgezogenen Folie bereitgestellt. Dies ermöglicht einen Rückgriff auf herkömmliche Bestandteile eines Bauelementes, die bereits umfangreich erprobt sind, und in besonderem Maße die Bereitstellung einer hochwertigen Oberfläche für das Bauteil ermöglichen.

Gemäß einer weiteren vorteilhaften Ausgestaltung der Erfindung ist die Durchführung des Schrittes k) vorgesehen: Anbringen einer Deckschicht an der dem Substrat abgewandten Seite der Partikelschaummasse. Eine solche Deckschicht kann beispielsweise eine Innendekorschicht, beispielsweise eine Wandtäfelung, insbesondere eine Kunststoffschicht sein. Für den Fall, dass das gefertigte Bauelement z. B. eine Wand oder einen Wandungsabschnitt eines Caravans oder eines Caravan-Anhängers ausbildet, kann die Dekorschicht z. B. eine typische Innenausstattungsfläche eines solchen Caravans nach herkömmlicher Art und Weise sein.

Gemäß einer weiteren vorteilhaften Ausgestaltung der Erfindung umfasst das erfindungsgemäße Verfahren den folgenden Schritt:

### I) Bearbeiten des Formlings zu einem Bauelement.

Als Bearbeitungsschritte kommen diverse Bearbeitungsverfahren in Betracht. Hierzu gehört beispielsweise bedarfsweise ein Trennen oder Abtrennen von Teilen oder Bereichen des Formlings, ggf. auch ein Abtrennen oder Trennen von Abschnitten des Substrats. Hierzu gehört z. B. auch ein Schritt des Reinigens, und/oder ein Schritt einer Oberflächenbearbeitung, insbesondere an der Außenseite des Substrats, beispielsweise ein Aufrauhen oder Polieren oder Glätten der Oberfläche, ggf. auch das Anbringen einer zusätzlichen Schicht oder Folie, beispielsweise einer zusätzlichen Funktionsschicht.

Von der Erfindung ist auch umfasst, wenn die dem Substrat abgewandte Seite der ausgehärteten Partikelschaummasse bearbeitet wird, beispielsweise mit einer zusätzlichen Haut oder einem zusätzlichen Material oder einer Folie verbunden oder beaufschlagt, z. B. besprüht, beklebt, lackiert, vernietet, verschraubt oder mit einem anderen Element verklebt wird.

Gemäß einer weiteren vorteilhaften Ausgestaltung der Erfindung weist die Folie eine Wandstärke zwischen 0,2 mm und 13 mm auf. Diese Ausführungsform der Erfindung erlaubt ebenfalls einen Rückgriff auf herkömmliche Folien, die bei zahlreichen Verbundwerkstoffen erprobt werden konnten, und deren Tiefzieheigenschaften und Oberflächeneigenschaften hinreichend bekannt und erforscht sind.

Gemäß einer weiteren vorteilhaften Ausgestaltung der Erfindung umfasst die ausgehärtete Partikelschaummasse eine Wandstärke zwischen 1 cm und 30 cm. In Abhängigkeit von den geforderten Festigkeiten des angefertigten Bauelementes wird die Wandstärke der ausgehärteten Partikelschaummasse berechnet und ausgelegt. Trotz der verhältnismäßig großen Wandstärken kann das endgefertigte Bauelement ein nur sehr geringes Gewicht aufweisen.

Gemäß einer weiteren vorteilhaften Ausgestaltung der Erfindung ist das Bauelement als ein Fahrzeugteil für ein Kfz, oder für ein Nutzfahrzeug, oder für ein Caravan-Fahrzeug ausgebildet, und ist beispielsweise ein Innenausstattungsteil, oder eine Laderaumabdeckung, oder ein Verkleidungsteil, oder eine Motorhaube, oder ein Dachelement, oder ein Dachsegment, oder eine Fahrzeugwand, oder ein Fahrzeugwandelement.

Gemäß einer weiteren vorteilhaften Ausgestaltung der Erfindung umfasst das granulare Ausgangsmaterial expandierbares EPS, expandierbares EPP oder expandierbares PEEK. Es handelt sich hier sämtlich um Materialien, die aufschäumbar, d. h. expandierbar sind, und die sich gemäß der Erfindung dazu eignen vollständig aufgeschäumt oder expandiert zu werden, um nachfolgend lose, in Form von Granulat, einem Werkzeug zugeführt werden zu können und in dem Werkzeug verbacken werden zu können.

Gemäß einer weiteren vorteilhaften Ausgestaltung der Erfindung umfasst das Verfahren den Schritt m), der vor dem Schritt h) durchgeführt wird:
m) Positionieren von Verstärkungselementen, insbesondere nach Art von Zugankern, beispielweise nach Art von Tapes, in dem Unterwerkzeug, wobei nach dem Verbringen der teilweise aufgeschäumten Partikel in das Unterwerkzeug die Partikel die Verstärkungselemente umhüllen.

Gemäß dieser vorteilhaften Ausgestaltung der Erfindung wird die aufgeschäumte Partikelschaummasse durch Verstärkungselemente verstärkt oder versteift. Diese sind insbesondere so ausgebildet, dass sie Zugkräfte in einer Richtung quer zur flächenhaften Erstreckung des Bauelementes übertragen können. Hierdurch kann die Steifigkeit des Bauelementes erhöht werden. Von der Erfindung ist auch umfasst, wenn sich die Verstärkungselemente entlang der Erstreckungsrichtung des flächenhaft ausgebildeten Bauelementes erstrecken. Dabei können beispielsweise auch flächenhafte Gebilde wie Matten, Gelege, Gewirke etc. aus Verstärkungsfasern, beispielsweise aus Glasfasern, Carbonfasern, Aramidfasern, Basaltfasern oder anderen geeigneten Verstärkungsfasern, in das Unterwerkzeug vor dem Verfüllen in den Unterbringungsraum mit teilweise aufgeschäumten Partikel eingelegt werden.

Die Erfindung betrifft gemäß einem weiteren Aspekt ein flächenhaft ausgebildetes Bauelement nach Anspruch 10.

Der Erfindung liegt die Aufgabe zugrunde, ein Bauelement anzugeben, welches bei nur geringem Gewicht eine hohe Festigkeit und Tragfähigkeit aufweist, und preisgünstig fertigbar ist.

Die Erfindung löst diese Aufgabe mit den Merkmalen des Anspruches 10.

Zur Vermeidung von Wiederholungen wird bezüglich der Erklärung und Erläuterung der Merkmale des Anspruches 10 sowie zur Erläuterung der Erfindung nach Anspruch 10 auf die vorherigen Ausführungen zu den Ansprüchen 1 bis 9 in analoger Weise verwiesen.

Weitere Vorteile der Erfindung ergeben sich aus den nicht zitierten Unteransprüchen, sowie anhand der nachfolgenden Beschreibung der in den Zeichnungen dargestellten Ausführungsbeispiele. Darin zeigen:
- Fig. 1: in einer teilgeschnittenen schematischen Ansicht ein Ausführungsbeispiel eines Ofens, in welchen granulares Ausgangsmaterial in Form von Partikeln eines Partikelschaumes eingefüllt wird, wobei das granulare Ausgangsmaterial ungeschäumt ist,
- Fig. 2: den Ofen der Fig. 1 mit einer zusätzlich dargestellten Infrarot-Strahlungsheizung, wobei die zuvor eingefüllten Partikel in einen vollständig aufgeschäumten Zustand überführt worden sind,
- Fig. 3: ein erstes Werkzeug mit Unterwerkzeug und Oberwerkzeug und einer als Substrat ausgebildeten Folie in bahnförmigem, flachliegendem Zustand,
- Fig. 4: das geschlossene Werkzeug der Fig. 3 mit tiefgezogener Folie,
- Fig. 5: ein weiteres Werkzeug, in dem die tiefgezogene Folie der Fig. 4 positioniert ist, wobei in das Unterwerkzeug die vollständig aufgeschäumten Partikel des Partikelschaums gemäß Fig. 2 eingefüllt werden,
- Fig. 6: das Werkzeug der Fig. 5 mit zusätzlich dargestelltem Oberwerkzeug kurz vor dem vollständigen Schließen des Werkzeugs,
- Fig. 7: das Werkzeug der Fig. 6 in vollständig geschlossenem Zustand, wobei zusätzlich eine Heizeinrichtung für das Werkzeug dargestellt ist,
- Fig. 8: das Werkzeug der Fig. 7 in geöffnetem Zustand bei verbackener und ausgehärteter Partikelschaummasse,
- Fig. 9: den aus dem Werkzeug der Fig. 8 entnommenen Formling unter Andeutung von Trennlinien, entlang derer Überstandsbereiche des Substrats getrennt werden,
- Fig. 10: ein weiteres Ausführungsbeispiel eines Formlings bzw. eines nach dem erfindungsgemäßen Verfahren gebildeten erfindungsgemäßen Bauelementes mit einer zusätzlichen Schicht auf der dem Substrat abgewandten Seite der ausgehärteten Partikelschaummasse,
- Fig. 11: ein weiteres Ausführungsbeispiel eines erfindungsgemäßen Bauelementes in einer Darstellung gemäß Fig. 10, wobei lediglich zu Illustrationszwecken die Porenstruktur des ausgehärteten Partikelschaumes in einer gegenüber Fig. 10 geänderten Weise dargestellt ist,
- Fig. 12: ein weiteres Ausführungsbeispiel zur Veranschaulichung des erfindungsgemäßen Verfahrens in einer Darstellung gemäß Fig. 5, wobei ein Werkzeug in geöffnetem Zustand dargestellt ist, in das vollständig aufgeschäumte, lose Partikel eingefüllt sind, wobei das Volumen der in das Werkzeug eingefüllten Partikel größer ist, als das Volumen des Unterbringungsraumes in dem Werkzeug, und
- Fig. 13: in einer Darstellung gemäß Fig. 12 das geschlossene Werkzeug unter Komprimierung der losen, granularen aufgeschäumten Partikel der Fig. 12 zur Veranschaulichung einer erfolgten Volumenreduktion in dem Werkzeug einhergehend mit dem bereits durchgeführten Schritt des Verbackens.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

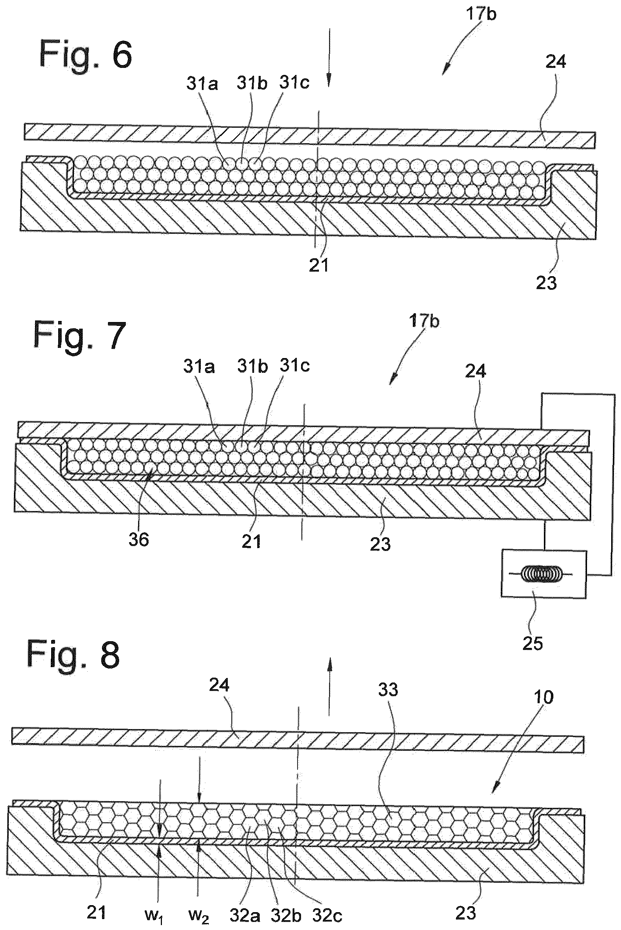

Ausführungsbeispiele von Bauelementen, die gemäß dem erfindungsgemäßen Verfahren gefertigt worden sind, sind in den Figuren 8, 9, 10, 11 und 13 in ihrer Gesamtheit mit 10 bezeichnet.

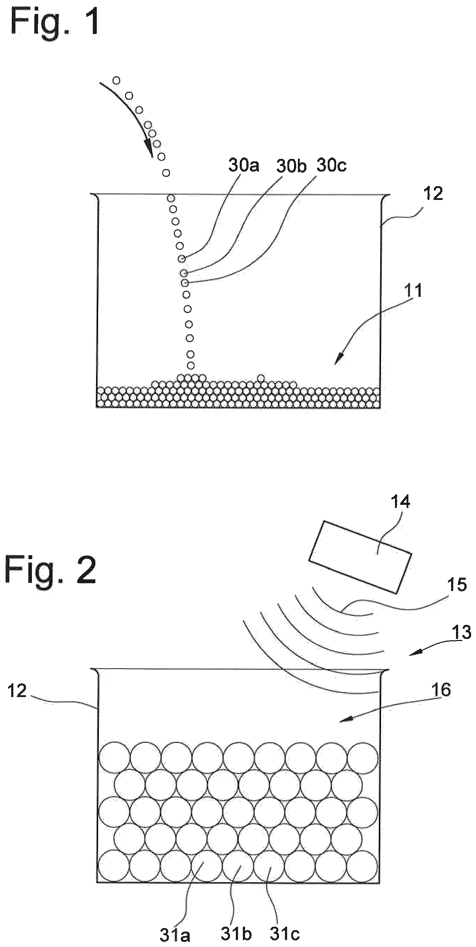

Im Folgenden soll ausgehend von Fig. 1 das Verfahren zur Fertigung eines solchen Bauelementes 10 vorgestellt werden:
Ausweislich Fig. 1 ist ein Behältnis 12 dargestellt, in welches ein Granulat 11 eines Partikelschaumes eingefüllt wird. Die einzelnen Granulatpartikel, die beispielhaft mit den Bezugszeichen 30a, 30b, 30c bezeichnet sind, sind ungeschäumt, und stellen das Ausgangsmaterial zur Fertigung eines Partikelschaumes dar. Auf die einzelnen Materialien, die gemäß dem erfindungsgemäßen Verfahren verwendet werden können, wird an anderer Stelle detailliert eingegangen.
Ausweislich Fig. 2 ist das Behältnis 12 Bestandteil eines Ofens 13, in dem die Granulatpartikel 30a, 30b, 30c vollständig aufgeschäumt werden können:
   Hierzu ist eine Heizung 14, insbesondere eine Infrarotheizung 14, vorgesehen, die unter Verwendung von Infrarotstrahlen 15 (angedeutet) in den Ofen 13 eine vorherbestimmte Strahlungsleistung einbringt, um eine bestimmte Temperatur oder einen bestimmten Temperaturbereich zu erreichen. Die Granulatpartikel 30a, 30b, 30c werden in dem Ofen 13 der Temperatureinwirkung für eine vorherbestimmte Zeit ausgesetzt und schäumen vollständig auf. Man erkennt, dass die einzelnen Partikel 30a, 30b, 30c der Fig. 1 erheblich an Volumen gewinnen und gemäß Fig. 2 zu vollständig aufgeschäumten Partikeln 31a, 31b, 31c mutieren.

Angemerkt sei, dass die Figuren selbstverständlich nicht maßstäblich zu verstehen sind, sondern dass nur beispielhaft der Vorgang des Aufschäumens und die Volumenvergrößerungen dargestellt werden sollen.

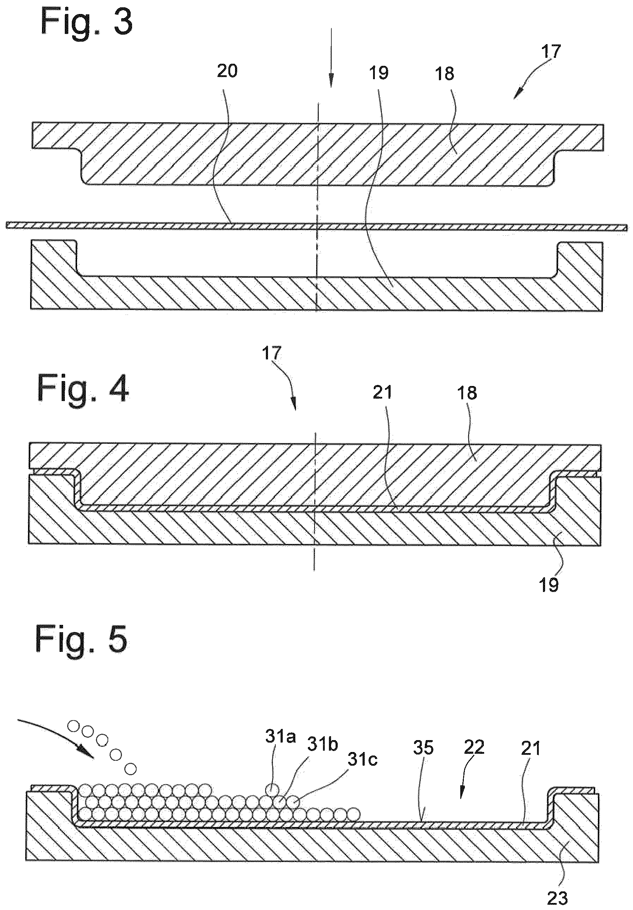

Die vollständig aufgeschäumten Partikel 31a, 31b, 31c sind noch immer lose, insbesondere nicht miteinander verbunden. Während des Prozesses des Aufschäumens gemäß Fig. 2 kann durch zusätzliche Maßnahmen, wie beispielsweise Rütteln des Behältnisses 12, Rühren, Verwendung von Chemikalien, oder Einbringen von Chemikalien in das Behältnis 12 etc. erreicht werden, dass die Partikel 31a, 31b, 31c sich nicht miteinander verbinden oder sich nicht überwiegend miteinander verbinden, sondern noch als lose, schüttfähige oder gießfähige Masse transportierbar sind. Diese Masse wird ausweislich Fig. 5 in ein Unterwerkzeug 23 eines Werkzeuges 17b eingefüllt.

Zunächst soll anhand der Figuren 3 bis 4 die Herstellung des Substrates 21 erläutert werden:
Ausweislich Fig. 3 wird ein erstes Werkzeug 17 bereitgestellt, welches ein Oberwerkzeug 18 und ein Unterwerkzeug 19 umfasst. Die maßgeblichen Werkzeugteile können nach Art einer Matrize und nach Art einer Patrize ausgebildet sein. Man erkennt in Fig. 3 eine Folie 20 in flachliegendem, bahnförmigem Zustand, also einem Ausgangszustand. Fig. 3 zeigt das Werkzeug in geöffnetem Zustand.

Infolge eines Schließens des Werkzeuges wird die Folie 20 aus dem flachliegenden Zustand tiefgezogen. Durch den Tiefziehvorgang kann eine beliebige Raumkontur auf die Folie aufgebracht werden. Der Tiefziehvorgang kann - was in den Figuren nicht dargestellt ist - auf herkömmliche Weise durch Temperatur unterstützt werden. Für den Tiefziehvorgang kommen alternativ zu dem Präge-/Gesenkvorgang des Werkzeugs 17 der Fig. 3 auch Blasform-Verfahren oder andere Umform-Verfahren in Betracht, bei denen die Folie erwärmt wird, und durch Ansaugen in ihre endgültige Form verbracht wird.

Nach dem Öffnen des Werkzeugs 17 aus dem Zustand der Fig. 4 kann die tiefgezogene Folie 21 entnommen werden, und einem anderen Werkzeug zugeführt werden. Ein solches zweites Werkzeug 17b ist in den Figuren 5 bis 8 dargestellt.

Von der Erfindung ist auch umfasst, wenn die Folie 21 nach dem Tiefziehprozess in dem Unterwerkzeug 19 verbleibt, und lediglich das Oberwerkzeug ausgetauscht wird. Im Folgenden sei angenommen, dass ausgehend von Fig. 5, die tiefgezogene Folie 21 in ein anderes, zweites Unterwerkzeug 23 eines anderen Werkzeugs 17b verbracht wurde.

Ausweislich Fig. 5 wird in das Unterwerkzeug 23 in einen Unterbringungsraum 22, der zur Aufnahme der vollständig aufgeschäumten Partikel 31a, 31b, 31c, dient, und der der Rückseite 35 der tiefgezogenen Folie 21 zugewandt ist, die schüttbare oder gießbare Masse aus vollständig aufgeschäumten Partikeln 31a, 31b, 31c verbracht. Ein Befüllen des zweiten Unterwerkzeugs 23 bzw. des dafür vorgesehenen Unterbringungsraumes 22, kann manuell oder maschinell oder maschinenunterstützt erfolgen, bis ein vorgegebenes Volumen oder eine vorgegebene Masse vollständig aufgeschäumter Partikel 31a, 31b, 31c in dem Unterbringungsraum 22 positioniert und insbesondere auch verteilt ist.

Hierbei kann eine in den Figuren nicht dargestellte Austragungs- oder Ausbringungsvorrichtung vorgesehen sein, die nach Art eines Zuführkopfes die Partikel entlang des Unterbringungsraumes 22 gleichmäßig verteilt.

Sodann wird das Werkzeug 17b geschlossen. Hierzu wird ein Oberwerkzeug 24 ausgehend von einem Zustand gemäß Fig. 6, in dem das Werkzeug 17b noch teilweise geöffnet ist, in einen Schließzustand verfahren. Der Unterbringungsraum 22 ist nun allseitig geschlossen.

Fig. 7 deutet eine Heizung 25 an, die das Werkzeug 17b, vorzugsweise sowohl Unterwerkzeug 23 als auch Oberwerkzeug 24, temperiert. Die Werkzeugtemperatur wird entsprechend der verwendeten Materialien für den Partikelschaum gewählt.

Infolge der Temperatureinwirkung sowie ggf. auch infolge einer Druckeinwirkung infolge des Verschließens des Werkzeuges werden die vollständig aufgeschäumten Partikel 31a, 31b, 31c miteinander und mit der Folie 21 verbacken. Die verbackene Partikelschaummasse ist insbesondere homogen ausgebildet.

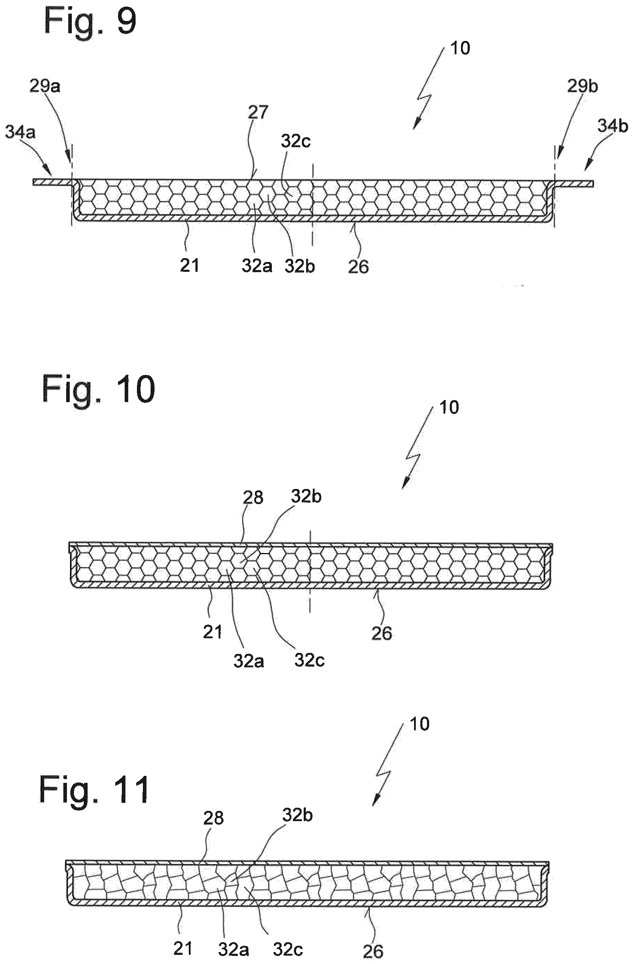

Man erkennt - lediglich beispielhaft angedeutet in Fig. 8 - eine Wabenstruktur. Diese ist ebenfalls nur schematisch zu verstehen, und soll die Formbeständigkeit und die Homogenität andeuten: tatsächlich wird die Struktur des verbackenen Partikelschaums unregelmäßig ausgebildet sein. Eine andere vergleichbare Struktur zeigt - ebenfalls rein schematisch - Fig. 11:
Hier ist anstelle der Rahmenstruktur der Fig. 8 eine unregelmäßige, etwa polygonartige Struktur in der schematischen Schnittdarstellung gezeigt.

Fig. 8 macht deutlich, dass die vollständig aufgeschäumten Partikel 31a, 31b, 31c gemäß Fig. 7 zu einer durchgehenden Partikelschaummasse im wesentlichen homogener Art verbacken werden, wobei zwischen einzelnen aufgeschäumten Partikeln 31a, 31b, 31c keine oder im wesentlichen keine Freiräume mehr verbleiben. Fig. 7 deutet derartige Freiräume, beispielhaft bezeichnet mit 36, dagegen noch an.

Angemerkt sei, dass, auch wenn sich das Gesamtvolumen der aufgeschäumten Partikel 31a, 31b, 31c beim Verbacken verkleinert, oder nicht oder nicht wesentlich verändert, die Kontur der einzelnen Partikel 31a, 31b, 31c sehr wohl Änderungen unterworfen werden kann.

Nach dem Verbacken der Partikel 31a, 31b, 31c miteinander sind in den Ausführungsbeispielen der Figuren 8, 9, 10, 11 und 13 die verbackenen Partikel mit den Bezugszeichen 32a, 32b, 32c beispielhaft bezeichnet.

Tatsächlich bildet die Vielzahl der miteinander verbackenen Partikel 32a, 32b, 32c insgesamt eine homogene Partikelschaummasse 33 oder einen homogenen aufgeschäumten Partikelschaum. Dieser kann ausweislich Fig. 8 auch innerhalb kurzer Zeit aushärten, insbesondere durch Kühlung des Werkzeugs auf eine Temperatur unterhalb der Schmelztemperatur der Partikelschaummasse, so dass - wie Fig. 8 andeutet - das Werkzeug geöffnet, und das Oberwerkzeug 24 von dem Unterwerkzeug 23 abgehoben werden kann. Nun kann der so gebildete Formling 10 aus der Werkzeugform entnommen werden.

Infolge des Prozesses des Verbackens - bei geschlossenem Werkzeug - verbindet sich der Partikelschaum dauerhaft und fest mit der Innenseite 35 der tiefgezogenen Folie 21. Hierdurch wird ein leichtes, biegesteifes und tragfähiges und doch preiswert herstellbares Verbundbauteil bereitgestellt.

Ausweislich Fig. 9 können bei Bedarf Überstandsbereiche 34a, 34b der Folie 21 entlang der Trennlinien 29a, 29b abgetrennt werden.

Das Ausführungsbeispiel der Fig. 10 zeigt die Rückseite 27 des Bauelementes 10, die mit einer zusätzlichen Schicht 28, z. B. aus Kunststoff, versehen werden kann.

Von der Erfindung sind auch Bauelemente umfasst, bei denen statt einer tiefgezogenen Folie 21 aus ABS oder PMMA eine dünne Folie aus Polyethylen oder Polypropylen, oder insbesondere auch sogenannte Slush-Häute, als Substrat 21 eingesetzt werden.

Die Seite 26 der tiefgezogenen Folie 21, die der ausgehärteten Partikelschaummasse 33 abgewandt ist, kann eine hochwertige Oberfläche ausbilden. Da für die Bereitstellung einer tiefgezogenen Folie 21 auf herkömmliche bekannte und erprobte Materialien zurückgegriffen werden kann, können entsprechende Oberflächeneigenschaften, die denen von herkömmlichen Materialien entsprechen, erreicht werden.

Von der Erfindung ist auch umfasst, wenn die Oberfläche 26 des Substrats 21 einer gesonderten Bearbeitung unterzogen wird, um eine hochwertige Oberfläche bereitzustellen. So können beispielweise Bearbeitungsschritte wie Polieren, Lackieren, Bedampfen, Aufrauhen, Benetzen etc. in Betracht kommen.

In Fig. 8 sind beispielhaft die Wandstärken W1 der tiefgezogenen Folie 21 bzw. des Substrats und W2, nämlich die Wandstärke der ausgehärteten Partikelschaummasse 33 angedeutet. Die Wandstärke W1 kann zwischen 0,2 mm und 13 mm betragen, und die Wandstärke W2 zwischen 1 cm und 30 cm.

Von der Erfindung sind insbesondere Bauteile umfasst, die als Caravan-Wandelemente ausgebildet sind. Beispielsweise können Wandabschnitte eines Caravan-Anhängers oder eines Caravans, oder vollständige Wandelemente eines Caravans, im Fahrzeugbau verwendet werden, unter Einsatz des erfindungsgemäßen Verfahrens.

Von der Erfindung sind weiter Ausführungsformen umfasst, die vorsehen, dass vor Befüllen des Unterbringungsraums 22 mit vollständig aufgeschäumten Partikeln 31a, 31b, 31c Verstärkungselemente in dem Unterbringungsraum 22 untergebracht werden.

Die in den Figuren nicht dargestellten Verstärkungselemente können z. B. Verstärkungsfasern aufweisen. Infolge des Befüllens des Unterbringungsraums 22 mit vollständig aufgeschäumten Partikeln 31a, 31b, 31c werden die Partikel gleich verteilt und umhüllen die Verstärkungselemente mehrseitig, vorzugsweise allseitig. Das fertig hergestellte Bauelement 10 umfasst eine ausgehärtete Partikelschaummasse, die die Verstärkungselemente sicher umschließt. Durch Positionierung der Verstärkungselemente können so insbesondere Zugkräfte übertragen und abgefangen werden.

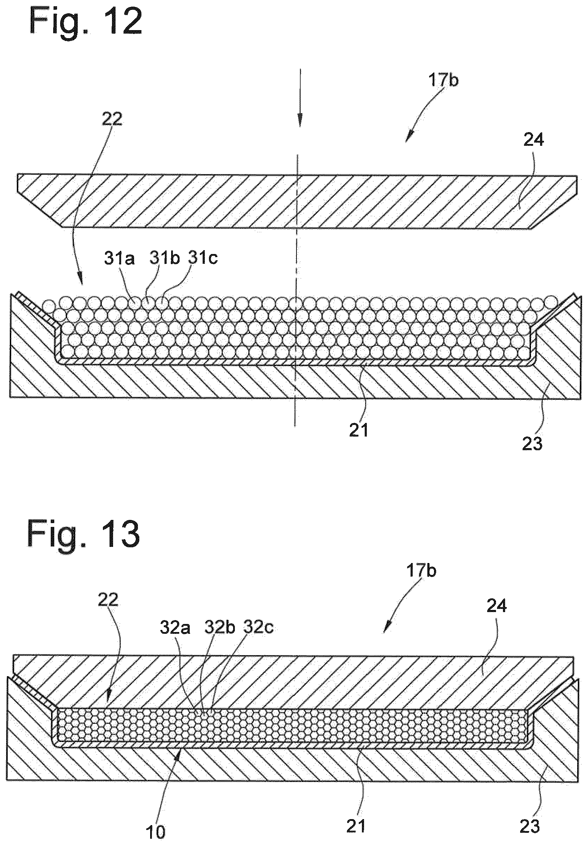

Ausweislich des Ausführungsbeispiels der Fig. 12 wird deutlich, dass der Innenraum 22 des Werkzeugs 17b ein bestimmtes Volumen aufweisen kann. Das Volumen der aufgeschäumten Partikel 31a, 31b, 31c, die in das Werkzeug hinein verbracht werden, kann bei der Ausführungsvariante der Figuren 12 und 13 demgegenüber größer sein. Das Volumen der Partikel 31a, 31b, 31c ist - in Summe - also größer, als das Volumen des Unterbringungsraums 22.

Infolge einer Schließung des Werkzeugs 17b, also durch Vollführung einer Aufeinander-zu-Bewegung vom Oberwerkzeug 24 relativ zu Unterwerkzeug 23, kann die lose granulare Partikelschaummasse der aufgeschäumten Partikel 31a, 31b, 31c komprimiert werden, und nachfolgend kann der Schritt des Verbackens unter Druck durchgeführt werden. Dabei kann eine Reduktion des Volumens der Partikelschaummasse erreicht werden.

Nach der Volumenreduktion, also nach Durchführung des Schrittes des Verbackens und nach dem Aushärten entspricht das Volumen der Partikelschaummasse selbstredend dem Volumen des Innenraums 22 des Werkzeugs.

Fig. 13 zeigt die Partikelschaummasse bereits in verbackenem und ausgehärtetem Zustand, also kurz vor dem Öffnen des Werkzeugs zwecks Entnahme des so gebildeten Formlings 10.

Das Werkzeug wird bei dem Ausführungsbeispiel der Figuren 12 und 13 insoweit mit ausgeschäumten Partikeln 31a, 31b, 31c überladen. Der Überladungsgrad kann beispielsweise zwischen 100% und 150%, vorteilhaft zwischen 105% und 115%, bezogen auf das Volumen des Innenraums 22 des Werkzeugs 17b, betragen.

## Patentansprüche

1. Verfahren zur Herstellung eines flächenhaft ausgebildeten Bauelementes (10) in Sandwich-Leichtbauweise mit einer hochwertigen Oberfläche (26), umfassend die folgenden Schritte:
a) Bereitstellen eines folienartigen Substrates (21)
b) Anordnen des Substrates (21) in einem Unterwerkzeug (23) eines Werkzeugs (17b),
c) Bereitstellen von granularem Ausgangsmaterial in Form von losen Partikeln (30a, 30b, 30c) eines aufschäumbaren Partikelschaumes, wie EPS, EPE oder PEEK,
d) vollständiges Aufschäumen der Partikel (30a, 30b, 30c), insbesondere in einem Infrarot-Backofen,
e) insbesondere Verbringen der vollständig aufgeschäumten Partikel (31a, 31b, 31c) in das Unterwerkzeug (23), und Anordnen der aufgeschäumten Partikel (31a, 31b, 31c) in einem Unterbringungsraum (22) in dem Unterwerkzeug (23),
f) insbesondere Schließen des Werkzeuges (17b),
g) insbesondere Heizen des Werkzeuges (17b),
h) Verbacken der aufgeschäumten Partikel (31a, 31b, 31c) zu einem insbesondere homogenen, aushärtbaren Partikelschaum (33), wobei sich der Partikelschaum mit dem Substrat verbindet,
i) Aushärtenlassen des Partikelschaums (33),
j) insbesondere Öffnen des Werkzeuges (17b) und Entnehmen des so gebildeten Formlings (10).

2. Verfahren nach Anspruch 1, **dadurch gekennzeichnet, dass** das Substrat von einer tiefgezogenen Folie (21) bereitgestellt ist.

3. Verfahren nach Anspruch 1 oder 2, **gekennzeichnet durch** den Schritt:
k) Anbringen einer Deckschicht (28) an der dem Substrat (21) abgewandten Seite (27) des Partikelschaums (33).

4. Verfahren nach einem der vorangegangenen Ansprüche, **gekennzeichnet durch** den Schritt:
l) Bearbeiten des Formlings zu einem Bauelement (10).

5. Verfahren nach Anspruch 2, **dadurch gekennzeichnet, dass** die Folie (21) eine Wandstärke (W1) zwischen 0,2 mm und 13 mm aufweist.

6. Verfahren nach einem der vorangegangenen Ansprüche, **dadurch gekennzeichnet, dass** der ausgehärtete Partikelschaum (33) eine Wandstärke (W2) zwischen 1 cm und 30 cm aufweist.

7. Verfahren nach einem der vorangegangenen Ansprüche, **dadurch gekennzeichnet, dass** das Bauelement (10) als Fahrzeugteil für ein Kfz oder für ein Nutzfahrzeug oder für ein Caravan-Fahrzeug, wie Innenausstattungsteil, Laderaumabdeckung, Verkleidungsteil, Motorhaube, Dachelement oder Dachsegment, Fahrzeugwand, oder Fahrzeug-Wandelement, ausgebildet ist.

8. Verfahren nach einem der vorangegangenen Ansprüche, **dadurch gekennzeichnet, dass** das Ausgangsmaterial von expandierbarem EPS, PP, oder PEEK bereitgestellt ist.

9. Verfahren nach einem der vorangegangenen Ansprüche, **dadurch gekennzeichnet, dass** vor Durchführung des Schrittes h) der folgende Schritt durchgeführt wird:
m) Positionieren von Verstärkungselementen, insbesondere nach Art von Zugankern, beispielsweise nach Art von Tapes, in dem Unterwerkzeug, wobei nach dem Verbringen der aufgeschäumten Partikel (31a, 31b, 31c) in das Unterwerkzeug (23) diese die Verstärkungselemente umhüllen.

10. Flächenhaft ausgebildetes Bauelement (10) mit einer hochwertigen Oberfläche (26), hergestellt nach einem der vorangegangenen Ansprüche, umfassend ein Substrat (21), insbesondere eine tiefgezogene Folie, mit der ein ausgehärteter Partikelschaum (33) verbunden ist.

11. Bauelement nach Anspruch 10, **dadurch gekennzeichnet, dass** die Folie (21) eine Wandstärke (W1) zwischen 0,2 mm und 13 mm aufweist.

12. Bauelement nach Anspruch 10 oder 11, **dadurch gekennzeichnet, dass** der ausgehärtete Partikelschaum (33) eine Wandstärke (W2) zwischen 1 cm und 30 cm aufweist.

13. Bauelement nach einem der Ansprüche 10 bis 12, **dadurch gekennzeichnet, dass** der Partikelschaum (33) gegen das Substrat (21) geschäumt ist.
